# EUROPÄISCHE PATENTSCHRIFT

(11) **EP 3 896 457 B1**
(45) Veröffentlichungstag und Bekanntmachung des Hinweises auf die Patenterteilung: **15.02.2023**
(21) Anmeldenummer: 21167216.7
(22) Anmeldetag: 07.04.2021
(51) Int. Cl.: G01N 35/00, G01N 35/10, F04B 13/00, G01F 25/00, G01F 13/00, F04B 23/02, F04B 49/10, F04B 51/00

(54) **AUTOMATISCHE VERIFIZIERUNG UND RE-KALIBRIERUNG EINES PUMPENFÖRDERVOLUMENS**
AUTOMATIC VERIFICATION AND RECALIBRATION OF A PUMP DELIVERY VOLUME
VÉRIFICATION AUTOMATIQUE ET RÉ-ÉTALONNAGE D'UN VOLUME TRANSPORTÉ DE POMPE

(30) Priorität: 14.04.2020 DE 102020204687
(43) Veröffentlichungstag der Anmeldung: 20.10.2021
(73) Patentinhaber: Bruker BioSpin GmbH, 76275 Ettlingen (DE)
(72) Erfinder: Braumann, Ernst Ulrich, 76275 Ettlingen (DE); Hofmann, Martin, 76332 Bad Herrenalb (DE)
(74) Vertreter: Kohler Schmid Möbus Patentanwälte

(56) Entgegenhaltungen:
- EP-A1- 1 359 398
- DE-A1- 4 138 477
- GB-A- 2 214 164

## Beschreibung

Die Erfindung betrifft ein Verfahren zur Prüfung des Fördervolumens einer Pumpe zum Fördern von Fluiden, insbesondere von Flüssigkeit, ein Verfahren zur Kalibrierung bzw. Re-Kalibrierung eines Pumpen-Fördervolumens mittels einer solchen Prüfung des aktuellen Pumpen-Fördervolumens sowie eine Vorrichtung zur Prüfung des Fördervolumens einer Pumpe und/oder zur Kalibrierung eines Pumpen-Fördervolumens gemäß einem dieser Verfahren.

Derartige Prüf- und Nachjustage-Verfahren sowie die dafür erforderlichen Einrichtungen sind schon seit Jahrzehnten bekannt, im Laborbetrieb gang und gäbe und die zugehörigen Vorrichtungen auf dem Markt erhältlich.

### Hintergrund der Erfindung

Die vorliegende Erfindung betrifft allgemein den Bereich der Prüfung und Kalibrierung von Fluid-Pumpen hinsichtlich ihres aktuellen Fördervolumens. Im Labor kommen derartige Pumpen häufig zum Einsatz, wenn Flüssigkeiten untersucht und/oder behandelt oder weiterverarbeitet werden sollen. Beispielsweise kann dies unter anderem auch das Auffangen von Eluat-Fraktionen aus einer Einrichtung zur Flüssigkeitschromatographie umfassen, aber auch regelmäßige Entnahmen und Untersuchungen von Flüssigkeitsfraktionen aus kontinuierlich überwachten chemischen Reaktionen, wobei die Untersuchungen mittels analytischer Messungen, insbesondere mittels der Magnetresonanz-Spektroskopie erfolgen können.

Die Präparation solcher flüssigen Proben wird immer öfter automatisiert mit einem XYZ Flüssigkeitsroboter (="Liquid-Handler") durchgeführt. Damit erreicht man einen höheren Durchsatz und eine bessere Reproduzierbarkeit der Ergebnisse als bei manueller Präparation. Bei humanmedizinischen Proben, wie Serum oder Plasma, welche unter S2 Bedingungen präpariert werden müssen, ist eine Automation zur Sicherheit des Laborpersonals sogar vorgeschrieben.

Die NMR (=Nuclear Magnetic Resonance)-Spektroskopie ist eine weit verbreitete Messmethode, mit der chemische Verbindungen analysiert werden können. Üblicherweise wird bei der NMR-Spektroskopie eine zu vermessende Probe in einem Probenröhrchen in eine Probensonde gegeben, welche im NMR-Spektrometer vermessen wird. In der NMR bezieht sich die ProbenPräparation hauptsächlich auf das Addieren und Mischen von originalen Proben mit Substanzen, welche entweder eine gewollte Reaktion hervorrufen (z.B. Protein-Bindungsreaktion) bzw. auf das Hinzufügen von deuterierten Lösemitteln, um einen stabilen Lock für die NMR Messung zu bekommen. Hinzu kommt auch noch der Transfer nach einer Präparation aus dem Probengefäß in ein NMR Röhrchen bzw. direkt in eine NMR-Durchflusszelle.

Voraussetzung für die Reproduzierbarkeit und die Exaktheit der Probenpräparation sind korrekte Fördermengen der eingesetzten Pumpen. Alle Pumpentypen unterliegen einem gewissen Verschleiß und sollten in regelmäßigen Abständen kontrolliert und gegebenenfalls auch neu kalibriert werden, um korrekte und vergleichbare Ergebnisse zu erhalten.

Außerdem sind real geförderte Pumpen-Volumina je nach Bauart mehr oder weniger- von den Eigenschaften des zu fördernden Mediums und den dadurch entstehenden Druckverhältnissen abhängig.

Die Fördermenge bei Membran- und Zahnradpumpen sind z.B. sehr abhängig von der Viskosität und Dichte der eingesetzten Lösung, aber auch von der Umgebungstemperatur. Kolben- & Spritzen Pumpen sind darauf weniger empfindlich, zeigen aber auch kleinere Volumenabweichungen bei Systemänderungen.

Daraus folgt, dass man bei einem notwendigen Wechsel der Applikation auf eine niedrigere Viskosität, wie z.B. von Wasser auf Acetonitril, bei einer auf Wasser kalibrierten Pumpe eine Fördermenge kleiner 98% bekommt. Bei einer Mischung von 50:50 H₂O / Methanol wird die Fördermenge -auf Grund der gestiegenen Viskosität der Mischung- in Bezug auf reines Wasser größer 105% sein.

Auch ein Wechsel von Kapillaren beziehungsweise Kanülen mit anderen axialen Längen und/oder Innendurchmessern verändert die internen Druckverhältnisse und könnten zu relevanten Abweichungen der geförderten Volumina führen.

Um auch über Jahre hinweg vergleichbare Ergebnisse zu erzielen, ist eine regelmäßige Kontrolle und gegebenenfalls Korrektur der Pumpen-Volumen-Parameter notwendig.

Aktuell ist diese Prozedur nur manuell durchführbar. Ein definiertes Volumen wir in ein abgewogenes Gefäß abgegeben bzw. aus dem Gefäß abgesaugt und gewogen. Über die bekannte Dichte (z.B. Wasser bei 21 °C 0,996g/ml) kann man den aktuell erforderlichen Korrektur-Faktor bestimmen und in den Pumpen-Parametern entsprechende Korrektur-Faktoren eintragen und erneut prüfen.

Für diese Prozedur ist eine Präzisions-Waage in räumlicher Nähe bzw. auf dem XYZ-Flüssigkeitsroboter notwendig, um die Verdunstungsverluste möglichst klein zu halten.

Neben der manuellen Wägung von definierten abgegebenen oder angesaugten Volumen, wie oben beschrieben, gibt es noch eine automatisierte Volumenbestimmung mit dem automatischen Setzen des Korrekturfaktors. Im letztgenannten Fall wird direkt in ein Gefäß pipettiert, welches auf einer Waage steht, die auf der Arbeitsfläche des Flüssigkeitsroboters platziert ist und die Wäge-Ergebnisse zur Faktoren-Korrektur benutzt. Solange die Waage auf dem Arbeitsfeld steht, sind keine anderen Arbeiten/Präparationen möglich. Die Waage okkupiert einen wesentlichen Bereich des Arbeitsfeldes. Es ist daher wenig sinnvoll die Waage als ständigen Bestandteil der Arbeitsfläche zu haben. Außerdem birgt diese Lösung den Nachteil der Verdunstung und somit einer möglichen Verfälschung des Ergebnisses.

### Spezieller Stand der Technik

Die EP 2 933 613 B1 (= Referenz [1]) beschreibt Verfahren und Vorrichtungen zur automatisierten Klassifizierung einer Flüssigkeit sowie zur automatisierten Anpassung von Voreinstellungen für eine kapazitive Flüssigniveaumessung. Hierbei geht es um das automatisierte Erkennen von Flüssigkeits-Klassen durch Benutzung der cLLD Funktion (**cLLD** = **c**apacitve **L**iquid **L**evel **D**etection), jedoch nicht um das Benutzen dieser cLLD Funktion zur Prüfung des Pumpenvolumens oder gegebenenfalls einer Korrektur.

Die US 2013/0319108 A1 (= Referenz [2]) beschreibt das Füllen von Gefäßen sowie die Prüfung des Flüssigkeitsstandes, um eine Überfüllung des jeweiligen Gefäßes zu vermeiden. Hierzu werden definierte Flüssigkeits-Volumina wiederholt in ein Gefäß gegeben und der Füllstand gemessen, bis ein vorgegebenes Level erreicht ist. Eine Kalibrierung der Abgabepumpe wird hier jedoch nicht beschrieben.

Das in der US 2012/0024055 A1 (= Referenz [3]) beschriebene komplette Dispensing-System benutzt kapazitive LLD nicht nur, um die Flüssigkeitsstände zu detektieren, sondern auch zur Kontrolle, ob Pipetten-Spitzen aufgesteckt beziehungsweise abgeworfen sind. Die dazugehörige Elektronik wird im Detail beschrieben. In diesem Dokument geht es jedoch nicht darum, das abgegebene Volumen einer Liquid-Pumpe auf Korrektheit zu prüfen, geschweige denn, die Pumpe entsprechend der erreichten Ergebnisse zu kalibrieren.

Die US 20011/0102004 A1 (= Referenz [4]) beschreibt das Funktionsprinzip von LLD mittels kapazitiver Elektronik. Es wird zwar ein "Selbsttest" per Simulation erwähnt, aber der bezieht sich eher auf die Elektronik mit einem Referenzschwingkreis als auf ein definiertes Pumpenvolumen. Ein sich änderndes Pumpenvolumen kann damit jedoch nicht kalibriert werden.

Des Weiteren werden in keiner der oben diskutierten Schriften kalibrierte Gefäße, wie etwa NMR-Röhrchen, erwähnt. Insbesondere legt der Stand der Technik nicht nahe, dass mit Hilfe von kalibrierten Gefäßen mittels des cLLD ein Kontrollvolumen bezüglich der zur Förderung eingesetzten Fluid-Pumpe bestimmt werden könnte.

Nachteilig bei den bisher in diesem Zusammenhang bekannten einschlägigen Verfahren zur Prüfung des Fördervolumens einer Pumpe und/oder zur Kalibrierung eines Pumpen-Fördervolumens sowie bei den Vorrichtungen zur Durchführung dieser Verfahren ist entweder ein Mangel an Automatisierbarkeit und/oder die Notwendigkeit des Einsatzes umfangreicher, teurer ZusatzEinrichtungen sowie oftmals die Komplexität derartiger Verfahren und Vorrichtungen.

Die GB 2 214 164 A (= Referenz [5]) beschreibt ein Verfahren zur Bestimmung der Flussrate einer Pumpe zum Fördern von Flüssigkeit mit folgenden Schritten:
i) Bereitstellen eines volumendefinierten Probengefäßes mit bekanntem Gefäßvolumen,
ii) Abgabe eines voreingestellten, gewünschten Abgabevolumens einer Systemflüssigkeit in das Probengefäß mittels der Pumpe,
iii) Messen eines ersten Füllstands des Probengefäßes und daraus Berechnung des realen Abgabevolumens im Probengefäß,
iv) Absaugen des voreingestellten, gewünschten Absaugvolumens aus dem Probengefäß mittels der Pumpe,
v) Messen eines zweiten Füllstands des Probengefäßes und daraus Berechnung des real in Schritt iv) abgesaugten Absaugvolumens. Zudem könnten aus Referenz [5] folgende Schritte entnommen werden:
vi) Abgleich der gemessenen realen Volumina der Schritte iii) und v) mit den gewünschten, theoretisch geförderten Volumina der Schritte ii) und iv),
vii) Prüfen, ob in Schritt vi) festgestellte Messwertabweichungen von den theoretisch gewünschten Werten innerhalb eines vorgegebenen Toleranzbereichs liegen oder nicht.

Allerdings offenbart Referenz [5] ein Verfahren zur Bestimmung der Flussrate einer Pumpe, nicht jedoch ein Verfahren zur Prüfung des Fördervolumens einer Pumpe. Die Bestimmung der Flussrate ist möglicherweise für den in Referenz [5] angegebenen Verwendungszweck besser als eine Prüfung des Fördervolumens, da es sich dort um größere Volumina handelt, die auf Ackerflächen ausgebracht werden sollen.

### Aufgabe der Erfindung

Demgegenüber liegt der vorliegenden Erfindung die -im Detail betrachtet zunächst relativ anspruchsvolle und komplexe- Aufgabe zugrunde, ein Verfahren zur Prüfung des aktuellen Fördervolumens einer Fluid-Pumpe unter Verwendung der oben beschriebenen Schritte i) bis vii) sowie ein Verfahren zur Kalibrierung bzw. Re-Kalibrierung des Pumpen-Fördervolumens mittels einer solchen Prüfung und auch eine Vorrichtung zur Durchführung der Prüfung und/oder zur Kalibrierung mit unaufwändigen, einfach beschaffbaren oder bereits standardmäßig beim Anwender vorhandenen technischen Mitteln so zu verbessern, dass eine überwiegend automatisierbare und auch hinsichtlich bestimmter Prozessparameter gezielt optimierbare Prüfung bzw. Verifizierung des tatsächlich aktuell geförderten Pumpenvolumens sowie gegebenenfalls eine Re-Kalibrierung der Pumpe aufgrund der gemessenen IST-Werte des Fördervolumens auf einfachste Weise und ohne teures zusätzliches Werkzeug ermöglicht wird. Dabei sollen insbesondere Eigenschaften, welche ein marktüblicher Flüssigkeitsroboter ohnehin bereits zur Verfügung stellt, in neuer Weise genutzt werden. Insbesondere soll die Prüfung des aktuellen Fördervolumens der Fluid-Pumpe möglichst präzise und ohne größeren Einfluss durch die aktuelle Form des Bodens im Probengefäß und dessen mögliche maßliche Toleranzen erfolgen.

### Kurze Beschreibung der Erfindung

Diese Aufgabe wird durch die vorliegende Erfindung auf ebenso überraschend einfache wie wirkungsvolle Weise hinsichtlich des Prüfungs- und Verifizierungs-Verfahrens gelöst durch das im Anspruch 1 spezifizierte Verfahren umfassend folgende Zwischenschritte zwischen den Schritten i) und ii):
i.a) Eindosieren einer geringen Menge einer Systemflüssigkeit in das Probengefäß (2) mittels der Pumpe (1), um den Flüssigkeitsspiegel auf einen definierten Startpunkt zu setzen, und
i.b) Messen der Startposition des Flüssigkeitsspiegels.

Mit dem erfindungsgemäßen Verfahren wird also zunächst das Probengefäß befüllt. Erst danach wird mit der eigentlichen Messung in einem definierten Anfangszustand begonnen. Das ist schon prinzipiell etwas anderes als das bekannte Verfahren.

Damit ergibt sich ein Prüfverfahren, welches mit Hilfe eines einfachen Füllstandsensors in einem volumenkalibrierten Gefäß das reale, tatsächlich von der Förderpumpe abgegebene Volumen erfasst und mit dem theoretisch erwarteten Abgabevolumen vergleicht. Gegebenenfalls erfolgt dann im Anschluss auch eine Nachjustage beziehungsweise Re-Kalibrierung. Das erfindungsgemäße Verfahren ist rein Volumen-basiert und wird oben diskutierten vom Stand der Technik nicht einmal ansatzweise nahegelegt.

Die Erfassung der Pumpenvarianzen ist unabhängig vom spezifischen Gewicht der Systemflüssigkeit und deren Viskosität. Abhängig von der Art der Pumpe (z.B. Kolben-, Zahnrad-, der Kreisel-, Membran-, Spritzenpumpe) und deren Schlupfverhalten, sowie der eingesetzten Systemflüssigkeit ändert sich das geförderte Volumen. Mittels der vorgestellten Erfassung des Pumpenfehlers bei gegebenem Fördervolumen in Druck- und Saugmodus kann der Fehler durch Anpassung der Pumpenfaktoren auf das korrekte Volumen auf einfache Weise nachjustiert werden.

Bezüglich einer Justage beziehungsweise Nach-Justage des Pumpen-Fördervolumens wird die obige Erfindungsaufgabe dadurch gelöst, dass nach Durchführung des erfindungsgemäßen Prüfverfahrens in einem weiteren Schritt eine Anpassung von Einstellparametern der Pumpe, vorzugsweise der Pumpenparameter für Ansaugen und Abgeben von Flüssigkeitsvolumina, entsprechend der in Schritt vi) festgestellten Messwertabweichungen zwischen gemessenen realen Volumina und theoretischen, gewünschten Volumina erfolgt.

Hinsichtlich einer Vorrichtung gemäß Anspruch 12 zur Prüfung des Fördervolumens einer Pumpe und/oder zur Kalibrierung eines Pumpen-Fördervolumens ausgeführt zur Ausführung eines der oben beschriebenen erfindungsgemäßen Verfahren wird die Erfindungsaufgabe gelöst durch die Kombination folgender Merkmale:
- eine Pumpe zum Fördern einer Flüssigkeit mit einer Kanüle,
- einen XYZ- Flüssigkeitsroboter,
- mindestens ein volumenkalibriertes Probengefäß, (d.h. ein definiertes Gefäß mit dessen Füllstand direkt das Volumen bestimmt werden kann),
- einen Füllstandsensor zum Erfassen des Füllstandes in dem Probengefäß,
- eine elektronische Auswerte- und Ansteuervorrichtung, wobei die Vorrichtung geeignet ist, das Abgabevolumen der Pumpe anzusteuern und die Information des Füllstandsensors zu erfassen und mit Hilfe der Gefäß-Innenfläche das Volumen zu berechnen und wobei die Vorrichtung das berechnete Volumen mit dem Ansteuervolumen der Pumpe zu korrelieren.

**Besondere Vorteile** des erfindungsgemäßen, rein Volumen-basierten Messverfahrens:
1. Automatisierte Überprüfung des geförderten Volumens einer Pumpe ohne zusätzliches Werkzeug, wie z.B. einer Waage;
2. Automatisierte Überprüfung des abgesaugten Volumens einer Pumpe ohne zusätzliches Werkzeug, wie z.B. einer Waage;
3. Bei Benutzung der System-internen kapazitiven Flüssigkeitssensor-(cLLD) Funktion kann eine schnelle Kontrolle der Pumpe zwischen zwei Präparationen ohne zusätzlichen Platzbedarf erfolgen;
4. Messung ist unabhängig vom Pumpentyp, da sich die Messung rein auf das geförderte Volumen bezieht;
5. Messung ist unabhängig vom flüssigen Medium oder auch vom Mischverhältnis bei Lösemittelmischungen wie z.B. Wasser & Acetonitril;
6. Messung ist unabhängig von Umwelteinflüssen (Temperatur, Luftfeuchtigkeit, etc.);
7. Bei Abweichung vom Soll-Volumen kann eine automatisierte Korrektur der Pumpenparameter erfolgen;
8. Das Fördervolumen wird sowohl im Abgabe- als auch im Ansaugmodus überprüft, um die mechanische Hysterese zu berücksichtigen;
9. Relativ einfache Erhöhung der Exaktheit der Messung durch Verwendung von kleineren Innendurchmessern (ID) beim Messgefäß: 5.0 mm volumenkalibriertes Probengefäß (NMR Röhrchen) entspricht 4,2 mm Innendurchmesser, d.h. ein Volumen von 12,5 µl/mm und eine Genauigkeit bei einer Varianz von +/-0,1 mm in Z-Richtung von +/-1,2µl; bei einem 4,0 mm volumenkalibrierten Probengefäß entspricht 3,3 mm ID einem Volumen von 7,1µl/mm und eine Genauigkeit bei +/-0,1 mm in Z-Richtung von +/-0,71 µl; ein 3,0 mm volumenkalibriertes Probengefäß entspricht 2,4 mm ID ein Volumen von 4,5µl/mm und eine Genauigkeit bei +/-0,1 mm in Z-Richtung von +/-0,45 µl.

Verstopfungen einer Kanüle bzw. des Flusspfades sind mit dieser Funktion leicht zu erkennen. Damit erhöht sich die Betriebssicherheit des Flüssigkeitsroboters wesentlich. Bei wertvollen Proben kann somit schnell durch Abbruch der Applikation und Warnung an den Benutzer schlimmeres verhindert werden.

### Bevorzugte Ausführungsformen und Weiterbildungen der Erfindung

Eine bevorzugte Ausführungsform des erfindungsgemäßen Verfahrens ist dadurch gekennzeichnet, dass das Probengefäß vor der Durchführung von Schritt ii) vollständig entleert wird, um einen Startpunkt zu definieren.

Optional wird nach der Leerung ein Minimalvolumen eingefüllt bis zum Erreichen des volumenkalibrierten Bereichs, z.B. bei Probengefäßen mit abgerundetem Boden. Die Kanüle hat meist eine Öffnung, die nicht ganz bis zum Boden reicht, daher befinden sich häufig noch Flüssigkeitsreste im Probengefäß, welche die Messung verfälschen. Eine Segmentfüllung ist daher vorteilhaft.

Bei einer Klasse von vorteilhaften Varianten des erfindungsgemäßen Verfahrens erfolgt das Absaugen und/oder das Befüllen des Probengefäßes mittels einer in das Probengefäß, vorzugsweise bis zu dessen Boden, eingeführten Kanüle oder Pipette.

Diese Verfahrensvarianten können dadurch weitergebildet werden, dass die Kanüle oder Pipette nach dem Absaugen und/oder vor dem Befüllen des Probengefäßes gespült wird, damit sich keine Luftblasen mehr in der Kapillare oder Kanüle befinden, welche das Messergebnis verfälschen würden.

Bei vorteilhaften Ausführungsformen kann das Absaugen und/oder das Befüllen des Probengefäßes durch Abgabe in einem Nachverfolgungsmodus (="tracking modus") erfolgen.

Im Nachverfolgungsmodus berührt nur die Kanülenspitze die Flüssigkeitsoberfläche und es wird nicht die komplette Kanüle mit Flüssigkeit benetzt, was wiederum die Messung, durch mögliche Tröpfchen, welche an der KanülenOberfläche haften, verfälschen könnte.

Besonders bevorzugt ist auch eine Klasse von Ausführungsformen der Erfindung, bei denen in den Schritten iii) und/oder v) das Messen der aktuellen Füllstandwerte des Probengefäßes mittels eines Füllstandsensors kapazitiv (="cLLD"), per Ultraschall, mittels Luft-Überdrucksensor oder optisch erfolgt.

Vorteilhaft sind Weiterbildungen dieser Verfahrensvarianten, bei welchen ein bei einem XYZ-Flüssigkeitsroboter vorhandener kapazitiver cLLD-Füllstandsensor zur Erkennung von Flüssigkeitsoberflächen in den Schritten iii) und/oder v) für die Messung der aktuellen Füllstandwerte im Probengefäß eingesetzt wird. Bei dieser Weiterbildung kann eine bereits serienmäßig vorhandene Funktion des Flüssigkeitsroboters ohne zusätzliche weitere Ausrüstung für die Durchführung des erfindungsgemäßen Verfahrens verwendet werden.

Vorzugsweise wird ein Füllstandsensor mit einer Messgenauigkeit von ±0,1 mm in einer Z-Richtung verwendet.

Das An- bzw. Absaugen von Flüssigkeit mittels der Pumpe erfolgt mit hinreichend geringer Fördergeschwindigkeit, sodass keine Gasblasen im gesaugten Flüssigkeitsvolumen bzw. im Kalibrier-Röhrchen entstehen.

In den Rahmen der vorliegenden Erfindung fällt auch ein Verfahren zur Kalibrierung bzw. Re-Kalibrierung eines Pumpen-Fördervolumens mittels Prüfung des aktuellen Pumpen-Fördervolumens gemäß dem oben beschriebenen Prüfverfahren, bei welchem in einem weiteren Schritt eine Anpassung von Einstellparametern der Pumpe, vorzugsweise der Pumpenparameter für Ansaugen und Abgeben von Flüssigkeitsvolumina, entsprechend der in Schritt vi) festgestellten Messwertabweichungen zwischen gemessenen realen Volumina und theoretischen, gewünschten Volumina erfolgt.

Die Einstellung der Parameter der Pumpe bedeutet insbesondere, dass die Anzahl der Schritte pro Fördervolumen eingestellt wird. In Abhängigkeit von der Art der Pumpe kann dies die Anzahl der Schritte bei Verwendung eines Schrittmotors sein, bei Membranpumpen die Anzahl der Hübe, bei Zahnradpumpen die Anzahl der Umdrehungen jeweils pro Fördervolumen bedeuten. Ein weiterer Einstellparameter ist die Fördergeschwindigkeit, denn gerade beim (schnellen) Ansaugen von Flüssigkeiten können sich durch möglichen Unterdruck in der Zuleitung auch Gasblasen in den Kapillaren bilden, was durch Reduzieren der Fördergeschwindigkeit vermieden werden kann.

Besonders bevorzugt sind Varianten dieses Kalibrierungsverfahrens, bei denen für Abgabe und Ansaugen jeweils unterschiedliche Einstellparameter angepasst werden.

Bei alternativen oder ergänzenden Ausführungsformen des erfindungsgemäßen Kalibrierungsverfahrens wird zur Verifizierung des Anpassungserfolges nach der Anpassung von Einstellparametern der Pumpe das erfindungsgemäße Prüfverfahren nochmals durchgeführt und bei Feststellung nicht-tolerabler Messwertabweichungen in Schritt vii) erfolgt eine erneute Anpassung von Einstellparametern der Pumpe.

In den Rahmen der vorliegenden Erfindung fällt wie oben dargelegt auch eine Vorrichtung gemäß Anspruch 12.

Besonders bevorzugt sind Ausführungsformen der erfindungsgemäßen Vorrichtung, bei denen das Probengefäß axialsymmetrisch, vorzugsweise zylindersymmetrisch, insbesondere als einseitig offenes Röhrchen ausgebildet ist.

In der Praxis bewähren sich Ausführungsformen der erfindungsgemäßen Vorrichtung, bei welchen das Probengefäß einen Innendurchmesser von 2mm bis 10mm aufweist.

Vorteilhaft ist eine Ausführung des volumenkalibrierten Probengefäßes, bei der die Flüssigkeitsoberfläche relativ klein ist und einen Durchmesser von 2mm bis 10mm, besonders bevorzugt zwischen 3mm und 5 mm, aufweist, denn je kleiner die Flüssigkeitsoberfläche, desto genauer wird die Messung des resultierenden Volumens. Des Weiteren soll die Flüssigkeitsoberfläche auch deswegen minimiert werden, da manche Flüssigkeiten, wie z.B. Aceton oder Äther sehr schnell verdampfen und dadurch das Messergebnis verfälscht wird.

Weitere, ganz besonders vorteilhafte Ausführungsformen der erfindungsgemäßen Vorrichtung sind dadurch gekennzeichnet, dass ein kapazitiver Füllstandsensor vorhanden ist, und dass das volumendefinierte Probengefäß mit einer elektrisch leitenden Metallhülse umgeben ist.

Beim Einsatz der kapazitiven Füllstandsmessung (cLLD) kann es möglich sein, dass bei schmalen Gefäßen mit geringen Innendurchmessern ≤ 5mm oder bei sehr niedrig viskosen Systemflüssigkeiten, wie z.B. Aceton, nur unpräzise Messergebnisse resultieren. Dem kann abgeholfen werden, indem das volumendefinierte Probengefäß mit einer elektrisch leitenden Metallhülse umgeben wird, was die Messempfindlichkeit und dadurch die Messgenauigkeit erhöht. Auch bei der Verwendung unpolarer Lösemittel, wie Chloroform, Äther oder dergleichen erhöht die Metallhülse die Messempfindlichkeit und dadurch die Messgenauigkeit des kapazitiven Sensors.

Ganz besonders bevorzugt sind Anwendungen der erfindungsgemäßen Verfahren und Vorrichtungen im Bereich der Magnetresonanz, insbesondere in der NMR-Spektroskopie.

Bei Verwendung eines XYZ-Flüssigkeitsroboters mit vorhandenem kapazitivem cLLD- Füllstandsensor zur Erkennung von Flüssigkeitsoberflächen kann das Verfahren der Verifizierung oder Re-Kalibrierung als schneller Zwischenschritt durchgeführt werden, denn es hat keinen Einfluss auf die Präparationszyklen. Es werden lediglich Bauteile verwendet, die in der Vorrichtung bereits vorhanden sind, idealerweise in Verbindung mit einer kommerziell verfügbaren Waschstation am XYZ-Flüssigkeitsroboter.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung, welche durch die Ansprüche definiert ist.

### Detaillierte Beschreibung der Erfindung und Zeichnung

Die Erfindung ist in der Zeichnung dargestellt und wird anhand von Ausführungsbeispielen näher erläutert.

Es zeigen:
- Fig. 1: ein Flussdiagramm des prinzipiellen Verfahrensablaufes eines Prüf- und Kalibrier-Verfahrens;
- Fig. 2: schematische Darstellung verschiedener Phasen beim Absaugen und Befüllen des Probengefäßes mit einer Kanüle gemäß dem unten beschriebenen Ausführungsbeispiel; und
- Fig. 3: eine schematische Darstellung einer Ausführungsform der Vorrichtung zur Prüfung des Fördervolumens einer Pumpe und/oder zur Kalibrierung eines Pumpen-Fördervolumens mit einer der erfindungsgemäßen Verfahrensvarianten.

Die vorliegende Erfindung befasst sich mit einem speziell modifizierten Verfahren zur Prüfung des Fördervolumens einer **Pumpe 1** zum Fördern von Flüssigkeit, einem Verfahren zur Kalibrierung bzw. Re-Kalibrierung eines Pumpen-Fördervolumens mittels einer solchen Prüfung des aktuellen Pumpen-Fördervolumens, sowie einer Vorrichtung zur Prüfung des Fördervolumens einer Pumpe und/oder zur Kalibrierung eines Pumpen-Fördervolumens gemäß einem dieser Verfahren. Letztere kann beispielsweise Bestandteil einer Flüssigchromatographie-Einrichtung mit einer Trennsäule, aber etwa auch eines Reaktors für kontrollierbar ablaufende chemische Reaktionen sein.

Das Kernstück der Erfindung ist ein Prüfverfahren gemäß Anspruch 1.

Dieses erfindungsgemäße Prüfverfahren kann für sich alleine angewendet werden, aber auch als "Kernverfahren" in ein Verfahren zur Kalibrierung bzw. Re-Kalibrierung eines Pumpen-Fördervolumens "eingebaut" werden. Dazu erfolgt in einem weiteren Schritt eine Anpassung von Einstellparametern der Pumpe 1, vorzugsweise der Pumpenparameter für Ansaugen und Abgeben von Flüssigkeitsvolumina, entsprechend der in Schritt vi) festgestellten Messwertabweichungen zwischen gemessenen realen Volumina und theoretischen, gewünschten Volumina.

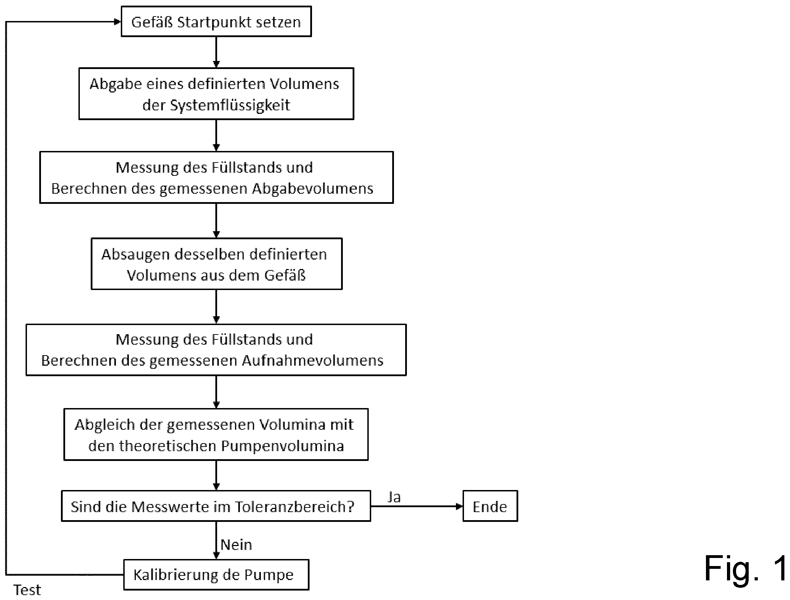

Der prinzipielle Ablauf eines Prüf- und Kalibrierverfahrens ist in **Fig. 1** als Flussdiagramm dargestellt. Nicht dargestellt sind dabei die Schritte 1.a) und 1.b) des erfindungsgemäßen Verfahrens.

### Ausführungsbeispiel:

Der Ablauf einer Pumpenvolumenbestimmung mit gegebenenfalls anschließender Korrektur kann bei Ausführungsvarianten mit konkreter Bemaßung folgende Schritte umfassen:
1. Eine **Kanüle 3** oder eine Pipette wird bis zum Boden des volumendefinierten Probengefäßes 2 mit bekanntem Gefäßvolumen eingetaucht. Im Rahmen dieses Ausführungsbeispiels wird ein standardisiertes NMR-Röhrchen mit 5mm Außendurchmesser verwendet, das einem Innendurchmesser von 4,2mm entspricht.
2. Das Gefäß 2 wird durch Absaugen von 600µl geleert, um einen definierten Startpunkt zu erhalten.
3. Die Kanüle 3 wird mit mehr als 600µl der Systemflüssigkeit aus einem **Vorratsbehälter 8** gespült, wobei vorzugsweise ein Volumen >1000µl in einen Abfallbehälter verworfen wird. Vorteilhaft wird so die Kanüle 3 blasenfrei mit der gewünschten Systemflüssigkeit beschickt.
4. Die Kanüle 3 wird bis zum Boden des Probengefäßes 2 eingetaucht, wodurch insbesondere bei dünnen Probengefäßen 2 keine Tröpfchen an der Wandung hängen bleiben, die das Ergebnis verfälschen würden.
5. Das Probengefäß 2 kann eine Bodenrundung aufweisen. Deshalb wird eine geringe Menge an Flüssigkeit dosiert, um den Flüssigkeitsspiegel auf den zylindrischen Bereich Probengefäßes 2 zu bringen, damit ein definierter Startpunkt gesetzt werden kann. Bei Standard-NMR Röhrchen sind das etwa 60µl um einen Füllstand von ca. 5mm zu erhalten.
6. Die Position des Flüssigkeitsstandes wird mit einem **Füllstandsensor 4** (kapazitiv, Ultraschall, optisch) geprüft, um die interne Startposition festzulegen. Vorzugsweise wird kapazitiv gemessen mittels cLLD, da insbesondere bei engen Probenröhrchen eine genauere Messung von max. +/- 0,1 mm möglich ist. Dabei wird die Kanüle etwas über den Flüssigkeitsstand herausgehoben und wieder abgesenkt bis der Füllstandsensor 4 bei Erkennung des Flüssigkeitsspiegels anspricht.
7. Eine definierte Menge an Flüssigkeit wird im Tracking-Modus (Nachverfolgungsmodus, bei welchen die Kanüle 3 knapp unter der Flüssigkeitsoberfläche geführt wird) befüllt, z.B. 500µl bei einem 5mm NMR-Röhrchen mit Innendurchmesser 4,19mm +/-0.025mm. Vorzugsweise findet dies deshalb im Tracking-Modus statt, weil eine Tröpfchenbildung an der Kanüle 3 das Volumen verfälschen würde, da diese Tröpfchen (ca. 1-5µl/Tröpfchen) dann im kalibrierten würden fehlen würden.
8. Die Position des Flüssigkeitsstands wird mit dem Füllstandsensor 4 zum Erfassen der Endposition gemessen. Dabei wird die Kanüle etwas über den Flüssigkeitsstand herausgehoben und wieder abgesenkt bis der Füllstandsensor 4 bei Erkennung des Flüssigkeitsspiegels anspricht.
9. Das tatsächlich abgegebene Volumen wird aus dem gemessenen Flüssigkeitsstand und der Gefäß-Innenfläche berechnet.
10. Der interne Fehler wird durch Abgleich des theoretischen Volumens mit dem realen Volumen erfasst. Es folgt ein Plausibilitätstest, ob das real abgegebene Volumen in einem vorgegebenen Toleranzbereich liegt.
11. Es wird ein Volumen von 500µl im Tracking-Modus abgesaugt.
12. Die Flüssigkeitsstand-Position wird mit dem Füllstandsensor 4 zur Erfassung der vorherigen Startposition geprüft. Dabei wird die Kanüle etwas über den Flüssigkeitsstand herausgehoben und wieder abgesenkt, bis der Füllstandsensor 4 bei Erkennung des Flüssigkeitsspiegels anspricht.
13. Das verbliebene Restvolumen wird aus dem gemessenen Flüssigkeitsstand in Kenntnis der Gefäß-Innenfläche berechnet.
14. Die Korrektheit wird durch erneuten Abgleich des theoretischen Volumens (60µl) mit dem realen Volumen definiert und es erfolgt ein Plausibilitätstest, ob das abgesaugte Volumen in einem vorgegebenen Toleranzbereich liegt.

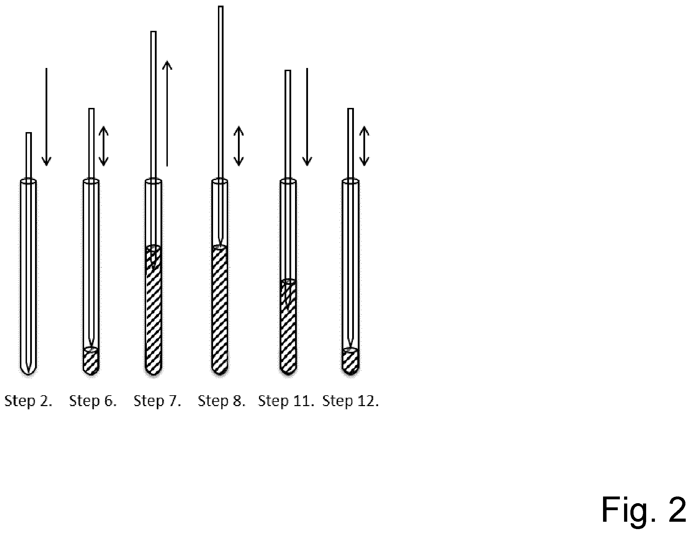

Die verschiedenen Phasen der jeweiligen Eintauchtiefe der Kanüle 3 oder einer Pipette beim Absaugen und Befüllen des Probengefäßes 2 gemäß den oben beschriebenen Schritten 2, 6-8, 11 und 12 ist in **Fig. 2** dargestellt.

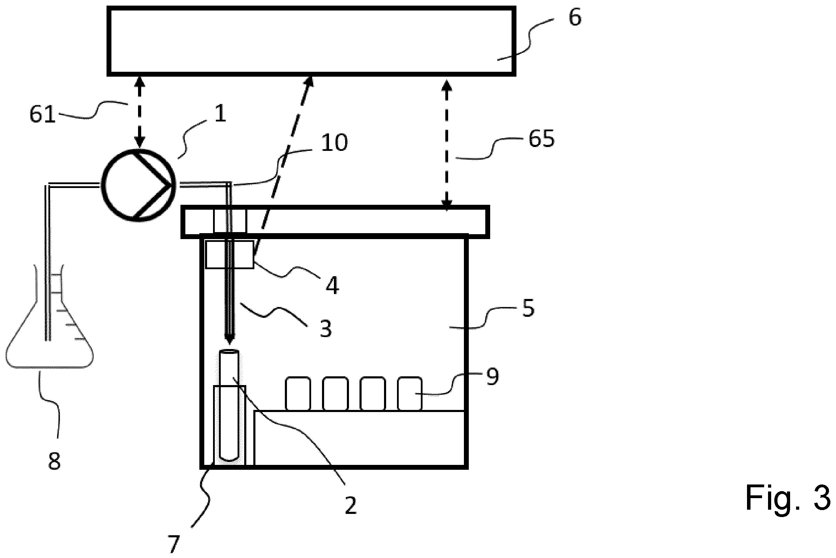

Die Schritte 11 bis 14 sind bei der Erfassung der Korrektheit der aktuellen IST-Werte der Pumpe 1 ebenfalls erforderlich, da mit der Vorrichtung im Messbetrieb auch immer eine **Messprobe 9** mit negativem Druck angesaugt wird und in einer **Verbindungskapillare 10** aufgenommen wird (siehe Fig. 3), woraus sie unmittelbar danach mittels positivem Druck in ein Messröhrchen abgegeben wird. Die physikalischen Bedingungen beim Abgeben von Flüssigkeiten durch eine Kanüle (einschließlich der Schlauchverbindung zur Pumpe 1) sind andere als beim Ansaugen. Beim Abgeben wird positiver Druck aufgebaut. Beim Ansaugen wird negativer, also Unterdruck entstehen. Saugt man zu schnell an, dann können Gasblasen im System entstehen welche das Ergebnis verfälschen können. Viele Pumpen sind aber nicht 100% dicht und reagieren somit auf die Aktionen Dispense & Aspirate (=Abgabe und Ansaugen) unterschiedlich. Das heißt, um 100% Sicherheit zu schaffen, dass man unter den gegebenen Bedingungen für beide Aktionen jeweils das identische Ergebnis bekommt, muss man auch beide Aktionen prüfen. Die üblicherweise eingesetzten Pumpen haben daher auch zwei unterschiedliche Faktoren, nämlich je einen für Abgabe und einen anderen für Ansaugen, um diesen physikalischen Effekt, der in Zusammenhang mit der mechanischen Hysterese des Systems steht, ausgleichen zu können.

Der Zeitaufwand für eine erfindungsgemäße Funktionsprüfung kann >1 Minute betragen.

Kalibrierung und Verifizierung können innerhalb von 5 Minuten erledigt werden.

### Optionale Pumpen Re-Kalibration

Die Verfahrensschritte des erfindungsgemäß Prüfverfahrens können bei Bedarf durch folgende (Re)Kalibrierungsschritte ergänzt werden:
15. Kalibrierung der Pumpe 1 durch Anpassen der Pumpenfaktoren für Ansaugen und Abgeben.
   Bei den obigen Schritten 10 bzw. 14 prüft man lediglich ob die Pumpe 1 noch im erlaubten Bereich fördert. Liegt die Abweichung innerhalb eines erlaubten Bereichs, dann kann man sofort weiterarbeiten. Die Kalibrierung, ist aber ein Eingriff in die Pumpen-Parameter, da man damit PumpenFaktoren korrigiert. Nach dieser Korrektur bedarf es daher einer erneuten Prüfung wie oben in den Schritten 1-14 beschrieben, um die Korrektur zu verifizieren.
16. Wiederholen der Schritte 6 bis 14 zur Verifizierung des Kalibrierungsschritts 15 für eine gegebene Systemflüssigkeit.

Die bei einem **XYZ-Flüssigkeitsroboter 5** serienmäßig vorhandene cLLD Funktion wird in der Regel zur Erkennung von Flüssigkeitsoberflächen eingesetzt. Optional kann der Füllstand auch mit anderen Techniken, wie z.B. per Ultraschall gemessen werden. Damit erreicht man, dass die Kanüle 3 nicht auf den Gefäßboden fahren muss, um Flüssigkeit abzusaugen, beziehungsweise dass bei der Abgabe von Flüssigkeit durch die Kanüle 3 nur wenige Millimeter der Kanülenspitze mit Flüssigkeit in Berührung kommen. Somit ist die Gefahr der Verunreinigung bzw. Volumenverluste durch an der Kanülenoberfläche haftende Tröpfchen wesentlich verringert.

Die Z-Position einer Flüssigkeitsroboter-Kanüle wird auf +/- 0,1 mm genau ausgelesen. Hat man ein volumenkalibriertes Gefäß, wie z.B. ein 5,0mm NMR-Röhrchen mit sehr enger Spezifikation der inneren Dimension (ID 4,19mm +/-0,025mm), kann man über die Füllhöhe das eingebrachte bzw. abgesaugte Volumen sehr exakt berechnen. 0,1mm entsprechen in dem o.g. NMR-Röhrchen einem Volumen von 1,2µl. Bei einem pipettierten Volumen von 500µl entsprechen diese +/-1,2µl einer Schwankung von +/-0,24%. Diese Präzision ist durch aus vergleichbar mit derjenigen einer Labor-Präzisionswaage.

Durch die geringe Oberfläche in einem 5mm OD-Röhrchen(<0,2mm²) und die sehr kurze Zeit zwischen Pipettieren und cLLD Messung können auch Verluste durch Verdunstung so gut wie ausgeschlossen werden. Dieser zeitliche Vorteil ermöglicht auch die Volumenbestimmung bei leicht verdampfbaren oder niedrig viskosen Flüssigkeiten, wie z.B. Aceton.

Einer Ausführungsform der erfindungsgemäßen Vorrichtung zur Prüfung des Fördervolumens einer Pumpe und/oder zur Kalibrierung eines Pumpen-Fördervolumens mit einer der oben beschriebenen erfindungsgemäßen Verfahrensvarianten ist schematisch in **Fig. 3** dargestellt. Die Vorrichtung umfasst:
- eine Pumpe 1 zum Fördern einer Flüssigkeit mit einer Kanüle 3,
- einen XYZ- Flüssigkeitsroboter 5,
- mindestens ein volumenkalibriertes Probengefäß 2, (d.h. ein definiertes Gefäß mit dessen Füllstand direkt das Volumen bestimmt werden kann),
- einen Füllstandsensor 4 zum Erfassen des Füllstands im Probengefäß 2,
- eine elektronische **Auswerte- und Ansteuervorrichtung 6**, die geeignet ist, das Abgabevolumen der Pumpe 1 anzusteuern und die Information des Füllstandsensors 4 zu erfassen und mit Hilfe der Gefäß-Innenfläche das Volumen zu berechnen sowie das berechnete Volumen mit dem Ansteuervolumen der Pumpe 1 zu korrelieren. Weiterhin ist die Auswerte- und Ansteuereinrichtung 6 dazu ausgelegt, die Parameter der Pumpe im Abgabe- und im Ansaugmodus einzustellen, d.h. die Anzahl der Schritte pro Fördervolumen und/oder die Fördergeschwindigkeit kann eingestellt werden.

Wenn ein kapazitiver Füllstandsensors 4 eingesetzt wird, kann das volumendefinierte Probengefäß 2 mit einer **elektrisch leitenden Metallhülse 7** umgeben werden, um die Messempfindlichkeit und dadurch die Messgenauigkeit des kapazitiven Sensors zu erhöhen.

Eine bi-direktionale Kommunikation zwischen der Auswerte- und Ansteuervorrichtung 6 und der Pumpe 1 ist in Fig. 3 mit dem **gestrichelten Doppelpfeil 61** angedeutet, eine bi-direktionale Kommunikation zwischen der Ansteuervorrichtung 6 und dem XYZ-Flüssigkeitsroboter 5 inkl. des Füllstandsensors 4 mit dem **gestrichelten Doppelpfeil 65**.

### Bezugszeichenliste:

- 1: Pumpe
- 2: volumendefiniertes Probengefäß
- 3: Kanüle oder Pipette
- 4: Füllstandsensor
- 5: XYZ-Flüssigkeitsroboter
- 6: Auswerte- und Ansteuervorrichtung
- 7: elektrisch leitende Metallhülse
- 8: Vorratsbehälter mit Systemflüssigkeit
- 9: Messproben
- 10: Verbindungskapillare
- 61: bi-direktionale Kommunikation Ansteuervorrichtung-Pumpe
- 65: bi-direktionale Kommunikation Ansteuervorrichtung- XYZ-Flüssigkeitsroboter

### Referenzliste

Für die Beurteilung der Patentfähigkeit in Betracht gezogene Publikationen:
[1] EP 2 933 613 B1
[2] US 2013/0319108 A1
[3] US 2012/0024055 A1
[4] US 20011/0102004 A1
[5] GB 2 214 164 A

## Patentansprüche

1. Verfahren zur Prüfung des Fördervolumens einer Pumpe (1) zum Fördern von Flüssigkeit, umfassend folgende Schritte:
i) Bereitstellen eines volumendefinierten Probengefäßes (2) mit bekanntem Gefäßvolumen,
ii) Abgabe eines voreingestellten, gewünschten Abgabevolumens einer Systemflüssigkeit in das Probengefäß (2) mittels der Pumpe (1),
iii) Messen eines ersten Füllstands des Probengefäßes (2) und daraus Berechnung des realen Abgabevolumens im Probengefäß (2),
iv) Absaugen des voreingestellten, gewünschten Absaugvolumens aus dem Probengefäß (2) mittels der Pumpe (1),
v) Messen eines zweiten Füllstands des Probengefäßes (2) und daraus Berechnung des real in Schritt iv) abgesaugten Absaugvolumens, **dadurch gekennzeichnet, dass** das Verfahren zusätzlich folgende Schritte umfasst:
vi) Abgleich der gemessenen realen Volumina der Schritte iii) und v) mit den gewünschten, theoretisch geförderten Volumina der Schritte ii) und iv),
vii) Prüfen, ob in Schritt vi) festgestellte Messwertabweichungen von den theoretisch gewünschten Werten innerhalb eines vorgegebenen Toleranzbereichs liegen oder nicht, und dass
zwischen Schritt i) und Schritt ii) folgende weiteren Schritte eingefügt werden:
i.a) Eindosieren einer geringen Menge einer Systemflüssigkeit in das Probengefäß (2) mittels der Pumpe (1), um den Flüssigkeitsspiegel auf einen definierten Startpunkt zu setzen, und
i.b) Messen der Startposition des Flüssigkeitsspiegels.

2. Verfahren nach Anspruch 1, **dadurch gekennzeichnet, dass** das Probengefäß (2) vor der Durchführung von Schritt ii) vollständig entleert wird.

3. Verfahren nach Anspruch 1 oder 2, **dadurch gekennzeichnet, dass** das Absaugen und/oder das Befüllen des Probengefäßes (2) mittels einer in das Probengefäß (2), vorzugsweise bis zu dessen Boden, eingeführten Kanüle (3) oder Pipette erfolgt.

4. Verfahren nach Anspruch 3, **dadurch gekennzeichnet, dass** die Kanüle (3) oder Pipette nach dem Absaugen und/oder vor dem Befüllen des Probengefäßes (2) gespült wird.

5. Verfahren nach einem der vorhergehenden Ansprüche, **dadurch gekennzeichnet, dass** das Absaugen und/oder das Befüllen des Probengefäßes (2) durch Abgabe in einem Nachverfolgungsmodus erfolgt.

6. Verfahren nach einem der vorhergehenden Ansprüche, **dadurch gekennzeichnet, dass** in den Schritten iii) und/oder v) das Messen der aktuellen Füllstandwerte des Probengefäßes (2) mittels eines Füllstandsensors (4) kapazitiv, per Ultraschall, mittels Luft-Überdrucksensor oder optisch erfolgt.

7. Verfahren nach Anspruch 6, **dadurch gekennzeichnet, dass** ein bei einem XYZ-Flüssigkeitsroboter (5) vorhandener kapazitiver cLLD- Füllstandsensor (4) zur Erkennung von Flüssigkeitsoberflächen in den Schritten iii) und/oder v) für die Messung der aktuellen Füllstandwerte im Probengefäß (2) eingesetzt wird.

8. Verfahren nach einem der Ansprüche 6 oder 7, **dadurch gekennzeichnet, dass** ein Füllstandsensor (4) mit einer Messgenauigkeit von ±0,1mm in einer Z-Richtung verwendet wird.

9. Verfahren zur Kalibrierung bzw. Re-Kalibrierung eines Pumpen-Fördervolumens mittels Prüfung des aktuellen Pumpen-Fördervolumens gemäß einem der vorhergehenden Ansprüche, **dadurch gekennzeichnet, dass** in einem weiteren Schritt eine Anpassung von Einstellparametern der Pumpe (1), vorzugsweise der Pumpenparameter für Ansaugen und Abgeben von Flüssigkeitsvolumina, entsprechend der in Schritt vi) festgestellten Messwertabweichungen zwischen gemessenen realen Volumina und theoretischen, gewünschten Volumina erfolgt.

10. Verfahren nach Anspruch 9, **dadurch gekennzeichnet, dass** für Abgabe und Ansaugen unterschiedliche Einstellparameter angepasst werden.

11. Verfahren nach Anspruch 9 oder 10, **dadurch gekennzeichnet, dass** zur Verifizierung des Anpassungserfolges nach der Anpassung von Einstellparametern der Pumpe (1) das Prüfverfahren nach einem der Ansprüche 1 bis 8 nochmals durchgeführt wird und bei Feststellung nicht-tolerabler Messwertabweichungen in Schritt vii) eine erneute Anpassung von Einstellparametern der Pumpe (1) erfolgt.

12. Vorrichtung ausgeführt zur Durchführung des Verfahrens nach einem der vorhergehenden Ansprüche zur Prüfung des Fördervolumens einer Pumpe (1) und/oder zur Kalibrierung eines Pumpen-Fördervolumens, umfassend:
- eine Pumpe (1) zum Fördern einer Flüssigkeit mit einer Kanüle (3),
- einen XYZ- Flüssigkeitsroboter (5),
- mindestens ein volumenkalibriertes Probengefäß (2), nämlich ein definiertes Gefäß mit dessen Füllstand direkt das Volumen bestimmt werden kann,
- einen Füllstandsensor (4) zum Erfassen des Füllstandes in dem Probengefäß (2),
- eine elektronische Auswerte- und Ansteuervorrichtung (6), wobei die Vorrichtung geeignet ist, das Abgabevolumen der Pumpe (1) anzusteuern und die Information des Füllstandsensors (4) zu erfassen und mit Hilfe der Gefäß-Innenfläche das Volumen zu berechnen und wobei die Vorrichtung das berechnete Volumen mit dem Ansteuervolumen der Pumpe (1) zu korrelieren.

13. Vorrichtung nach Anspruch 12, **dadurch gekennzeichnet, dass** das Probengefäß (2) axialsymmetrisch, vorzugsweise zylindersymmetrisch, insbesondere als einseitig offenes Röhrchen ausgebildet ist.

14. Vorrichtung nach Anspruch 12 oder 13, **dadurch gekennzeichnet, dass** das Probengefäß (2) einen Innendurchmesser von 2mm bis 10mm aufweist.

15. Vorrichtung nach Anspruch 12 bis 14, **dadurch gekennzeichnet, dass** ein kapazitiver Füllstandsensor (4) vorhanden ist, und dass das volumendefinierte Probengefäß (2) mit einer elektrisch leitenden Metallhülse (7) umgeben ist.

## Claims

1. Method for testing the delivery volume of a pump (1) for conveying liquid, comprising the following steps:
i) providing a volume-defined sample vessel (2) having a known vessel volume,
ii) dispensing a preset, desired dispensing volume of a system liquid into the sample vessel (2) by means of the pump (1),
iii) measuring a first fill level of the sample vessel (2) and calculating the actual dispensing volume in the sample vessel (2) therefrom,
iv) suctioning the preset, desired suction volume from the sample vessel (2) by means of the pump (1),
v) measuring a second fill level of the sample vessel (2) and calculating the suction volume actually suctioned out in step iv) therefrom,
**characterized**
**in that** the method additionally comprises the following steps:
vi) comparing the measured actual volumes of steps iii) and v) with the desired, theoretically conveyed volumes of steps ii) and iv),
vii) checking whether or not measured value deviations from the theoretically desired values determined in step vi) are within a predetermined tolerance range, **and in that** the following further steps are inserted between step i) and step ii):
i.a) metering a small amount of a system liquid into the sample vessel (2) by means of the pump (1) in order to set the liquid level to a defined starting point, and
i.b) measuring the starting position of the liquid level.

2. Method according to claim 1, **characterized in that** the sample vessel (2) is completely emptied before step ii) is carried out.

3. Method according to either claim 1 or claim 2, **characterized in that** the suction and/or the filling of the sample vessel (2) takes place by means of a cannula (3) or pipette which is inserted into the sample vessel (2), preferably as far as the bottom thereof.

4. Method according to claim 3, **characterized in that** the cannula (3) or pipette is rinsed after the suction and/or before the filling of the sample vessel (2).

5. Method according to any of the preceding claims, **characterized in that** the suction and/or the filling of the sample vessel (2) takes place by dispensing in a tracking mode.

6. Method according to any of the preceding claims, **characterized in that** in steps iii) and/or v), the current fill level values of the sample vessel (2) are measured by means of a fill level sensor (4) capacitively, by ultrasound, by an air overpressure sensor or optically.

7. Method according to claim 6, **characterized in that** a capacitive cLLD fill level sensor (4) for detecting liquid surfaces, which is present in an XYZ liquid robot (5), is used in steps iii) and/or v) for measuring the current fill level values in the sample vessel (2).

8. Method according to either claim 6 or claim 7, **characterized in that** a fill level sensor (4) which has a measurement accuracy of ±0.1 mm in a Z direction is used.

9. Method for calibrating or re-calibrating a pump delivery volume by testing the current pump delivery volume according to any of the preceding claims, **characterized in that** in a further step, setting parameters of the pump (1), preferably the pump parameters for suction and dispensing of liquid volumes, are adjusted in accordance with the measured value deviations between measured, actual volumes and theoretical, desired volumes determined in step vi).

10. Method according to claim 9, **characterized in that** different setting parameters are adjusted for dispensing and suction.

11. Method according to either claim 9 or claim 10, **characterized in that**, in order to verify adjustment success, after the adjustment of the setting parameters of the pump (1), the testing method according to any of claims 1 to 8 is carried out again and, in the case that non-tolerable measured value deviations are determined in step vii), the setting parameters of the pump (1) are readjusted.

12. Device for carrying out the method according to any of the preceding claims for testing the delivery volume of a pump (1) and/or for calibrating a pump delivery volume, comprising:
- a pump (1) for conveying a liquid by means of a cannula (3),
- an XYZ liquid robot (5),
- at least one volume-calibrated sample vessel (2), specifically a defined vessel, by means of the fill level of which the volume can be determined directly,
- a fill level sensor (4) for detecting the fill level in the sample vessel (2),
- an electronic evaluation and control device (6), wherein the device is suitable for controlling the dispensing volume of the pump (1) and acquiring the information of the fill level sensor (4) and for calculating the volume using the inner surface of the vessel, and wherein the device to correlate the calculated volume with the control volume of the pump (1).

13. Device according to claim 12, **characterized in that** the sample vessel (2) is formed axially symmetrically, preferably cylindrically symmetrically, in particular as a tube which is open on one side.

14. Device according to either claim 12 or claim 13, **characterized in that** the sample vessel (2) has an internal diameter of 2 mm to 10 mm.

15. Device according to claims 12 to 14, **characterized in that** a capacitive fill level sensor (4) is provided, and **in that** the volume-defined sample vessel (2) is surrounded by an electrically conductive metal sleeve (7).

## Revendications

1. Procédé de contrôle du volume refoulé par une pompe (1) affectée au refoulement d'un liquide, incluant les étapes suivantes, consistant à :
i) fournir un récipient d'échantillonnage (2) à volume bien défini, dont le volume est connu,
ii) introduire dans ledit récipient d'échantillonnage (2), au moyen de ladite pompe (1), un volume d'alimentation préréglé souhaité d'un liquide de système,
iii) mesurer un premier niveau de remplissage du récipient d'échantillonnage (2) et calculer, sur cette base, le volume d'alimentation effectif dans ledit récipient d'échantillonnage (2),
iv) aspirer hors du récipient d'échantillonnage (2), au moyen de la pompe (1), ledit volume d'alimentation préréglé souhaité,
v) mesurer un second niveau de remplissage dudit récipient d'échantillonnage (2) et calculer, sur cette base, le volume effectivement aspiré à l'étape iv),
**caractérisé par le fait que** ledit procédé inclut additionnellement les étapes suivantes, consistant à :
vi) établir un rapprochement entre les volumes effectifs mesurés aux étapes iii) et v) et les volumes souhaités, théoriquement refoulés aux étapes ii) et iv),
vii) contrôler si des écarts, constatés à l'étape vi), entre les valeurs mesurées et les valeurs théoriquement souhaitées se situent, ou non, dans les limites d'une plage de tolérances prédéfinie ;
et **par le fait que**
les étapes additionnelles suivantes sont ajoutées, entre l'étape i) et l'étape ii) :
i.a) introduction dosée d'une faible quantité d'un liquide de système dans le récipient d'échantillonnage (2), au moyen de la pompe (1), afin d'ajuster le niveau du liquide sur un point de départ bien défini, et
i.b) mesurage de l'emplacement initial dudit niveau du liquide.

2. Procédé selon la revendication 1, **caractérisé par le fait que** le récipient d'échantillonnage (2) est vidé, en totalité, préalablement à l'exécution de l'étape ii).

3. Procédé selon la revendication 1 ou 2, **caractérisé par le fait que** le récipient d'échantillonnage (2) est aspiré et/ou rempli au moyen d'une canule (3) ou d'une pipette introduite dans ledit récipient d'échantillonnage (2), de préférence jusqu'au fond de ce dernier.

4. Procédé selon la revendication 3, **caractérisé par le fait que** la canule (3) ou la pipette est rincée à l'issue de l'aspiration et/ou préalablement au remplissage du récipient d'échantillonnage (2).

5. Procédé selon l'une des revendications précédentes, **caractérisé par le fait que** le récipient d'échantillonnage (2) est aspiré et/ou rempli par alimentation dans un mode de suivi.

6. Procédé selon l'une des revendications précédentes, **caractérisé par le fait que** le mesurage des valeurs actuelles du niveau de remplissage du récipient d'échantillonnage (2), à l'étape/aux étapes iii) et/ou v), est effectué au moyen d'un détecteur (4) de niveaux de remplissage en mode capacitif, par des ultrasons, au moyen d'un détecteur de surpression d'air, ou par voie optique.

7. Procédé selon la revendication 6, **caractérisé par le fait qu'**un détecteur capacitif cLLD (4) de niveaux de remplissage, présent dans un robot XYZ (5) de traitement de liquides en vue de repérer des surfaces de liquides, est utilisé pour le mesurage des valeurs actuelles du niveau de remplissage du récipient d'échantillonnage (2) à l'étape/aux étapes iii) et/ou v).

8. Procédé selon l'une des revendications 6 ou 7, **caractérisé par le fait qu'**un détecteur (4) de niveaux de remplissage, doté d'une précision de mesure de ± 0,1 mm, et utilisé dans une direction Z.

9. Procédé dédié au calibrage, respectivement au recalibrage d'un volume refoulé par une pompe par contrôle du volume effectif refoulé par ladite pompe, conformément à l'une des revendications précédentes, **caractérisé par le fait que**, lors d'une étape supplémentaire, une adaptation de paramètres de réglage de la pompe (1), de préférence des paramètres de pompage dédiés à une aspiration et à une délivrance de volumes de liquide, est effectuée en concordance avec les écarts de valeurs mesurées, constatés à l'étape vi), entre des volumes effectifs mesurés et des volumes théoriques souhaités.

10. Procédé selon la revendication 9, **caractérisé par le fait que** des paramètres de réglage différents sont adaptés pour l'alimentation et l'aspiration.

11. Procédé selon la revendication 9 ou 10, **caractérisé par le fait que**, pour vérifier le succès de l'adaptation à l'issue de l'adaptation de paramètres de réglage de la pompe (1), le procédé de contrôle conforme à l'une des revendications 1 à 8 est exécuté une fois encore, et une adaptation réitérée de paramètres de réglage de ladite pompe (1) a lieu en cas de constatation, à l'étape vii), d'écarts inadmissibles entre des valeurs mesurées.

12. Dispositif conçu pour la mise en oeuvre du procédé conforme à l'une des revendications précédentes, dévolu au contrôle du volume refoulé par une pompe (1) et/ou au calibrage d'un volume refoulé par une pompe, comprenant
- une pompe (1) affectée au refoulement d'un liquide au moyen d'une canule (3),
- un robot XYZ (5) de traitement de liquides,
- au moins un récipient d'échantillonnage (2) à volume calibré, c'est-à-dire un récipient spécifié à l'aide du niveau de remplissage duquel le volume peut être directement déterminé,
- un détecteur (4) de niveaux de remplissage, conçu pour repérer le niveau de remplissage dans ledit récipient d'échantillonnage (2),
- un dispositif électronique (6) d'évaluation et de pilotage, sachant que ledit dispositif est approprié pour piloter le volume délivré par la pompe (1), pour détecter l'information dudit détecteur (4) de niveaux de remplissage, et pour calculer le volume à l'aide de la surface intérieure dudit récipient, et sachant que ledit dispositif établit une corrélation entre le volume calculé et le volume piloté de la pompe (1).

13. Dispositif selon la revendication 12, **caractérisé par le fait que** le récipient d'échantillonnage (2) est réalisé avec symétrie axiale, de préférence avec symétrie cylindrique, en particulier sous la forme d'un petit tube ouvert d'un côté.

14. Dispositif selon la revendication 12 ou 13, **caractérisé par le fait que** le récipient d'échantillonnage (2) présente un diamètre intérieur de 2 mm à 10 mm.

15. Dispositif selon les revendications 12 à 14, **caractérisé par** la présence d'un détecteur capacitif (4) de niveaux de remplissage ; et par le fait que le récipient d'échantillonnage (2), à volume bien défini, est entouré d'une gaine métallique (7) électriquement conductrice.
